# EUROPÄISCHE PATENTANMELDUNG

(11) **EP 1 628 181 A2**
(43) Veröffentlichungstag der Anmeldung: **22.02.2006**
(21) Anmeldenummer: 05017032.3
(22) Anmeldetag: 04.08.2005
(51) Int. Cl.: G05D 1/02

(54) **Besatzungsloses Fahrzeug bzw. Verband besatzungsloser Fahrzeuge**

(30) Priorität: 17.08.2004 DE 102004039844
(71) Anmelder: Base Ten Systems Electronics GmbH, 85399 Hallbergmoos (DE)
(72) Erfinder: Zoller, Ferdinand, 85399 Hallbergmoos (DE)
(74) Vertreter: TBK-Patent

(57) **Zusammenfassung**

Offenbart wird ein besatzungsloses Fahrzeug sowie ein Verband besatzungsloser Fahrzeuge, die zumindest über folgende Einrichtungen verfügen: ein Steuercomputer, der in der Lage ist, den Antrieb des Fahrzeugs sowie die Lenkung des Fahrzeugs zu steuern; eine Kommunikationseinrichtung, die in der Lage ist, mit einer Einsatzzentrale und/oder anderen, ggf. besatzungslosen Fahrzeugen zu kommunizieren; und einer Sensoreinrichtung, die in der Lage ist, über unterschiedliche Sensoren Signale aufzunehmen.

## Beschreibung

Die Erfindung betrifft ein besatzungsloses Fahrzeug, das in der Lage sein soll, unterschiedlichste Aufgaben zu erfüllen.

Es sind unterschiedlichste besatzungslose Fahrzeuge bekannt. Bspw. zum Betrieb von Lagern sind besatzungslose Fahrzeuge bekannt, die auf vorgegebenen Bahnen fahren und Gegenstände selbständig in das Lager einlagern oder aus dem Lager entnehmen. Weiterhin sind Studien zu besatzungslosen landwirtschaftlichen Maschinen bekannt, bei denen eine landwirtschaftliche Maschine über ein GPS-System auf einer vorbestimmten Fahrroute gesteuert wird und auf dieser Route die gewünschte Bodenbearbeitung vornimmt. Die bekannten besatzungslosen Fahrzeuge sind jedoch für bestimmte Anwendungen ausgelegt und nicht in der Lage, von diesen Anwendungen abweichende Aufgaben zu erfüllen. Insbesondere sind die bekannten Fahrzeuge nicht in der Lage, selbständig unterschiedlichste Aufgaben wahrzunehmen.

Aufgabe der Erfindung ist es daher, ein besatzungsloses Fahrzeug bzw. einen Verband besatzungsloser Fahrzeuge zu schaffen, das bzw. der in der Lage ist, unterschiedlichste Aufgaben weitestgehend autonom, in jedem Fall jedoch ohne Besatzung wahrzunehmen.

Diese Aufgabe wird durch die Merkmale des Anspruchs 1 und hinsichtlich eines Verbands unbemannter Fahrzeuge mit den Merkmalen des Anspruchs 18 gelöst.

Gemäß der Erfindung ist das besatzungslose Fahrzeug mit einem Steuercomputer ausgerüstet, der in der Lage ist, den Antrieb des Fahrzeugs sowie die Lenkung des Fahrzeugs zu steuern. Beabsichtigt ist, das Fahrzeug nicht auf vorbestimmten Bahnen zu führen, sondern ein Fahrzeug zu schaffen, das sich auf Straßen sowie im Gelände auf grundsätzlich beliebigen Routen fortbewegen kann. Vorteilhaft weist das Fahrzeug eine hohe Geländegängigkeit auf. Der Steuercomputer sowie der Antrieb und die Lenkung des Fahrzeugs soll daher so beschaffen sein, dass er das Fahrzeug vollständig ohne jegliche Besatzung sowohl auf Straßen als auch im Gelände fahren, also beherrschen kann.

Des weiteren ist das Fahrzeug mit einer Kommunikationseinrichtung ausgestattet, die in der Lage ist, mit einer Einsatzzentrale und/oder anderen besatzungslosen Fahrzeugen zu kommunizieren. Diese Kommunikationseinrichtung soll unterschiedliche Anforderungen erfüllen. Ist das Fahrzeug so ausgestattet, dass es vollständig autonom seinen Fahrweg bestimmt und diesen mittels des Steuercomputers auch fährt, so werden grundsätzlich keinerlei Signale von einer Einsatzzentrale benötigt, um das Fahrzeug auf dem Fahrweg zu führen. In diesem Fall dient die Kommunikationseinrichtung in erster Linie dazu, gesammelte Daten an die Einsatzzentrale und/oder andere, ggf. Besatzungslose Fahrzeuge, weiterzugeben. Es kann jedoch auch eine Fahrwegbestimmung vorgesehen werden, bei der Signale der Einsatzzentrale oder anderer Fahrzeuge benötigt oder benutzt werden, um einen geeigneten Fahrweg zu bestimmen. In diesem Fall muss die Kommunikationseinrichtung auch in der Lage sein, geeignete Signale von der Einsatzzentrale oder anderen Fahrzeugen zur Bestimmung des Fahrwegs zu empfangen.

Die Kommunikationseinrichtung kann aber auch zum Austausch von Fahrweg unabhängigen Daten und Signalen mit der Einsatzzentrale oder anderen Fahrzeugen vorgesehen sein. Weiterhin ist eine Sensoreinrichtung vorgesehen, die in der Lage ist, über unterschiedlichste Sensoren Signale aufzunehmen. Durch eine derartige Ausrüstung des Fahrzeugs wird dieses in die Lage versetzt, unterschiedlichste Aufgaben wahrzunehmen.

Gemäß Anspruch 18 sollen besatzungslose Fahrzeuge des Verbands auch auf der Basis von Signalen operieren, die von anderen Fahrzeugen des Verbands übermittelt werden. D.h., Einrichtungen der Fahrzeuge werden auf der Basis von Signalen, die von anderen Fahrzeugen des Verbands übermittelt werden, gesteuert oder geregelt. Selbstverständlich können zur Steuerung oder Regelung der diversen Einrichtungen, zu denen auch die für den Antrieb des Fahrzeugs sowie die Lenkung des Fahrzeugs verantwortlichen Einrichtungen, also im weiteren Sinne der Steuercomputer, gehören, sowie die Sensoreinrichtungen oder andere Einrichtungen, mit denen das Fahrzeug ausgestattet ist, Signale Verwendung finden, die von anderen Einrichtungen zur Verfügung gestellt werden. Derartige Signale können von der Einsatzzentrale kommen oder auch von anderen Einrichtungen, wie bspw. der Sensoreinrichtung des betroffenen Fahrzeugs. Bei im Verband operierenden Fahrzeugen ist lediglich wesentlich, dass ein Informationsaustausch der Fahrzeuge untereinander erfolgt und diese Informationen zur Steuerung oder Regelung von Systemen der Fahrzeuge Verwendung finden. Hierdurch kann ein ausgesprochen flexibler Einsatz der Fahrzeuge und ein schnelles Reagieren auf veränderte Umgebungsbedingungen gewährleistet werden.

Die im Patentanspruch 1 genannten Einrichtungen werden als Kernstücke der besatzungslosen Fahrzeuge angesehen. Darüber hinaus können die Fahrzeuge mit unterschiedlichsten weiteren Einrichtungen versehen sein. Die Fahrzeuge können mit Einrichtungen zur Aufnahme von Bodenproben versehen sein, wobei derartige Einrichtungen als Sensoren im weiteren Sinne zu betrachten sind. Die Fahrzeuge können auch mit einer Bewaffnung versehen sein, die über ein von der Kommunikationseinrichtung oder der Sensoreinrichtung aufgenommenes Signal oder einer Entscheidung des Steuercomputers aktiviert werden kann. Selbstverständlich kann der Steuercomputer Signale der Sensoreinrichtung oder durch die Kommunikationseinrichtung empfangene Signale verwerten. Durch die beschriebene Struktur wird ein autonomer Einsatz der Bewaffnung möglich, wenn dies erwünscht ist. Der Einsatz der Bewaffnung kann jedoch auch von einer Einsatzzentrale und/oder anderen Fahrzeugen ausgelöst werden.

Der Fahrweg des besatzungslosen Fahrzeugs kann vorbestimmt sein und das Fahrzeug kann gewissermaßen durch eine Fernsteuerung auf diesem Fahrweg geführt werden. Wesentlich dabei ist, dass es sich bei dem Fahrweg nicht um vorbestimmte Bahnen oder dgl. handelt, sondern um einen Fahrweg, der - wenn auch vorbestimmt - mit sehr hohem Freiheitsgrad weitgehend beliebig gestaltet werden kann. Bei einem angestrebten weitgehend autonomen Einsatz des Fahrzeugs ist es vorteilhaft, das Fahrzeug mit einer Fahrwegbestimmungseinrichtung zu versehen, mittels der der Fahrweg bestimmt wird. Der tatsächliche Fahrweg kann von der Fahrwegbestimmungseinrichtung mittels eines vorprogrammierten Kurses bestimmt werden, wobei zur Bestimmung des konkreten Fahrwegs Signale der Sensoreinrichtung oder sonstige Signale, bspw. auch von anderen Fahrzeugen abgegebene Signale, herangezogen werden können, um den Fahrweg den konkreten Gegebenheiten oder sich ändernden Einsatzbedingungen anzupassen.

Zur Bestimmung des Fahrwegs können unterschiedliche Bestimmungsarten herangezogen werden und durch eine geeignete Verknüpfung der am günstigsten erscheinende Fahrweg bestimmt werden. Bspw. kann eine vorgegebene Route, auf der das Fahrzeug grundsätzlich mittels einer Fernsteuerung geführt wird, als Ausgangsbasis für den konkreten Fahrweg herangezogen werden. Sollten durch die Sensoreinrichtung bspw. auf dieser vorbestimmten Route nicht überwindbare Hindernisse erkannt werden, kann autonom eine das Hindernis umfahrende Alternativroute bestimmt werden, die das Fahrzeug um das Hindernis herum wieder auf den bestimmten Kurs führt. Es können aber auch Signale anderer Fahrzeuge oder der Einsatzzentrale zu einer Änderung des vorbestimmten Kurses führen. Wird bspw. bei im Verband operierenden Fahrzeugen durch ein anderes Fahrzeug erkannt, dass die vorbestimmte Fahrroute bestimmte Gefahren aufweist oder für den geplanten Einsatz nicht die optimale Fahrroute darstellt, kann die konkrete Fahrroute auf der Basis der von dem genannten Fahrzeug übermittelten Signale entsprechend geändert werden.

Die Kommunikationseinrichtung kann mit einer Einrichtung zur Erhöhung der Störresistenz und Ausfallsicherheit ausgestattet sein. Besonders bei sicherheitsrelevanten Einsätzen oder militärischen Einsätzen muss eine hohe Störresistenz und Ausfallsicherheit angestrebt werden. Hierzu können getrennte Strecken zur Übertragung von Signalen vorgesehen sein. Getrennte Strecken können hierbei auch unabhängig zum Empfang und Senden von Signalen verwendet werden. Es kann eine zweifache oder noch höhere Redundanz vorgesehen werden.

Hinsichtlich der Steuerung des Fahrzeugs ist es vorteilhaft, wenn alle Einrichtungen des Fahrzeugs elektrisch betreibbar sind und auf andere Systeme, bspw. hydraulische und pneumatische Systeme, zumindest so weit wie möglich verzichtet wird. Eine rein elektrische Auslegung des Fahrzeugs ermöglicht eine hohe Flexibilität bei der Fahrzeugkonstruktion und eine relativ einfache Ansteuerung der verschiedenen Komponenten.

Selbstverständlich kann das Fahrzeug mit allen erdenklichen Sensoren ausgerüstet sein. Besonders hervorzuheben sind unterschiedlichste Normalsichtkameras sowie Infrarotkameras, Radar und Laserentfernungsmesser, wobei selbstverständlich auch 3D-Laser-Rangefinder vorgesehen sein können. Abhängig vom Einsatzgebiet des Fahrzeugs können selbstverständlich auch andere Sensoren vorteilhaft zum Einsatz kommen.

Bei militärischen Einsätzen, Einsätzen in Krisengebieten zur Antiterrorzwecken oder allgemein unsicheren Gebieten, in denen Gefahr besteht, dass das Fahrzeug angegriffen wird oder versucht wird, sich des Fahrzeugs zu ermächtigen, kann es sinnvoll sein, das Fahrzeug mit einer Selbstverteidigungseinrichtung auszustatten. Diese Selbstverteidigungseinrichtung kann durch von der Sensoreinrichtung empfangene Signale aktiviert werden, um eine zumindest weitgehend autonome Aktivierung der Selbstverteidigung zu ermöglichen. Darüber hinaus kann eine Aktivierung jedoch auch durch die Einsatzzentrale oder anderer Fahrzeuge veranlasst werden. Bspw. kann bei im Verband operierenden Fahrzeugen, sobald ein Fahrzeug einen Angriff feststellt, über ein geeignetes Signal bei allen weiteren Fahrzeugen die Selbstverteidigungseinrichtung aktiviert werden. Es sind unterschiedlichste Selbstverteidigungseinrichtungen denkbar und einsatzabhängig sinnvoll anwendbar.

Das Fahrzeug kann mit Leitungen versehen sein, die unter Strom gesetzt werden können, um eine geeignete Selbstverteidigung zu gewährleisten. Die verwendete Stromstärke kann variabel sein und von der Selbstverteidigungseinrichtung selbst bestimmt werden oder von einer Einsatzzentrale oder weiteren operierenden Fahrzeugen.

Zur Aktivierung der Selbstverteidigungseinrichtung kann eine spezielle Sensorik vorgesehen sein, die einen Angriff sicher erkennt. Hierzu können die genannten Sensoren vorgesehen sein oder auch andere geeignete Sensoren, wie Lichtschranken, Berührungssensoren, Wärmesensoren etc. Die Selbstverteidigungsmaßnahme kann abhängig von Art und Umfang des Angriffs bestimmt werden. Ebenso kann die eingesetzte Stromstärke bei einer derartigen Selbstverteidigungseinrichtung geeignet bestimmt werden. Bei fortgesetzten Angriffen kann die Stromstärke entsprechend erhöht werden.

Das Fahrzeug kann mit unterschiedlichen Nutzlasten versehen sein. Dabei kann das Fahrzeug so gestaltet sein, dass die Nutzlasten leicht ausgetauscht werden können, um das Fahrzeug an unterschiedliche Aufgaben anpassen zu können. Bewährt haben sich turmartige Aufbauten, die als Nutzlast oder Nutzlastträger angesehen werden können. Derartige Turmaufbauten eignen sich insbesondere, um Sensoren wie Kameras zu tragen. Aber auch für eine Bewaffnung oder die Kommunikationseinrichtung kann ein derartiger Turmaufbau interessant sein, um die Einrichtungen auf einer höheren Position anordnen zu können. Vorteilhaft ist ein derartiger Turmaufbau ausfahrbar gestaltet und kann über einen Teleskopmechanismus oder Scherenmechanismus ausgefahren werden. Ein derartiger Turmaufbau eignet sich insbesondere auch für Aufklärungseinheiten, die über diverse Sensoren verfügen.

Bei im Verband operierenden Fahrzeugen ist es wesentlich, dass die Fahrzeuge auch in der Lage sind, untereinander zu kommunizieren. Wie bereits ausgeführt, können die untereinander ausgetauschten Signale zur Steuerung und Regelung diverser Einrichtungen der einzelnen Fahrzeuge verwendet werden. Auch der Fahrweg kann, wie bereits ausgeführt, abhängig von Informationen bestimmt werden, die von anderen Fahrzeugen zur Verfügung gestellt werden. Wesentlich, insbesondere bei militärischen Einsätzen, kann es sein, dass die Fahrzeuge koordiniert gesteuert werden, um koordiniert die entsprechenden Aufgaben zu erfüllen.

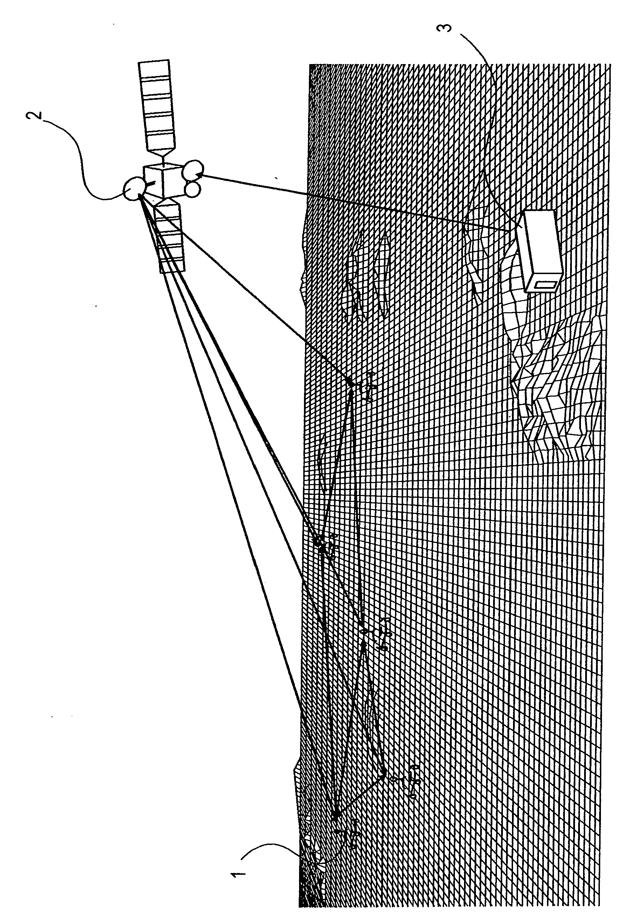

Die Figur zeigt schematisch einen Verband operierender besatzungsloser Fahrzeuge.

In der Figur ist ein Verband besatzungsloser Fahrzeuge 1 dargestellt, die über eine geeignete Kommunikationseinrichtung sowohl miteinander kommunizieren als auch beim konkreten Ausführungsbeispiel über einen Kommunikationssatelliten 2 mit einer Einsatzzentrale 3. Die besatzungslosen Fahrzeuge 1 operieren im Gelände auf einem vorbestimmten Fahrweg, der im Steuercomputer der Fahrzeuge 1 programmiert ist. Die Fahrzeuge 1 werden durch den Steuercomputer auf der gewünschten Fahrroute geführt, wobei ein Eingriff jederzeit möglich ist, wenn bspw. die Sensoreinrichtung erkennt, dass in der Fahrroute unüberwindbare Hindernisse vorliegen. In diesem Fall wird autonom eine Umfahrung des Hindernisses erstellt und das Fahrzeug 1 um das Hindernis herum geführt. Zu diesem Zweck ist das Fahrzeug 1 mit einem GPS-System ausgerüstet, das es ermöglicht, auch bei Abweichung von der vorprogrammierten Fahrroute das Fahrzeug 1 möglichst schnell wieder auf die vorprogrammierte Fahrroute zurückzuführen. Selbstverständlich können auch andere Systeme zur Orientierung des Fahrzeugs 1 mittels Funkpeilung oder andere Systeme wie Loran-Systeme zur Anwendung kommen.

Durch die Kommunikation der Fahrzeuge 1 untereinander ist es auch möglich, dass ein vorausfahrendes Fahrzeug 1 die Signale seiner Sensoreinrichtung auf die hinterherfahrenden Fahrzeuge 1 überträgt und die hinterherfahrenden Fahrzeuge 1 diese Signale zur Optimierung ihrer Fahrroute verwenden. Das vorausfahrende Fahrzeug 1 kann auch aktiv in den Fahrweg der nachfolgenden Fahrzeuge 1 eingreifen, wenn es bspw. erkennt aufgrund der eigenen Wahrnehmung oder durch Kommunikation mit der Einsatzzentrale 3, dass der für die nachfolgenden Fahrzeuge 1 programmierte Fahrweg zumindest beim momentanen Einsatz nicht der optimale Fahrweg ist. Wird bspw. das vorausfahrende Fahrzeug 1 angegriffen, kann dieses eine Fahrwegänderung der nachfolgenden Fahrzeuge veranlassen, um diese auf einer sichereren Fahrroute zu führen.

Sind nachfolgende Fahrzeuge 1 mit Sensorik ausgerüstet, über die das vorausfahrende Fahrzeug 1 nicht verfügt, aber an einem am vorausfahrenden Fahrzeug 1 erkannten Einsatzort benötigt werden, der nicht auf der Fahrroute des nachfolgenden mit der Sensorik ausgestatteten Fahrzeugs 1 liegt, so kann das vorausfahrende Fahrzeug 1 die Fahrroute dieses nachfolgenden Fahrzeugs 1 derart ändern oder eine Änderung veranlassen, dass das nachfolgende Fahrzeug 1 zu dem gewünschten Einsatzort geführt wird.

Sind die Fahrzeuge 1 bei einem militärischen Einsatz mit einer Bewaffnung ausgestattet, kann die Bewaffnung nicht nur durch die Einsatzzentrale 3, sondern bei einem autonomen Einsatz auch durch andere Fahrzeuge 1 aktiviert werden, z.B. für den Fall, dass ein Fahrzeug 1 angegriffen wird, bspw. unter Beschuss genommen wird. In diesem Fall kann der Angreifer durch die Sensorik eines beliebigen Fahrzeugs 1 geortet werden und die Bewaffnung einer oder mehrerer Fahrzeuge 1 entsprechend gesteuert werden, um den Angreifer auszuschalten.

Es wurde lediglich ein Beispiel für die Möglichkeiten, die mit dem erfindungsgemäßen unbemannten Fahrzeug 1 bzw. einem Verband derartiger Fahrzeuge 1 geschaffen werden, ausgeführt. Es ist jedoch klar, dass durch die zumindest sehr weitgehende Autonomie der Fahrzeuge 1 und die Möglichkeit der Fahrzeuge 1, miteinander zu kommunizieren und unterschiedlichste Signale und Daten auszutauschen sowie alternativ oder parallel eine Kommunikation mit einer Einsatzzentrale zu führen, vielfältigste Möglichkeiten und hochflexible Einsätze möglich sind.

## Patentansprüche

1. Besatzungsloses Fahrzeug, **dadurch gekennzeichnet, dass** Das Fahrzeug zumindest folgende Einrichtungen aufweist:
einen Steuercomputer, der in der Lage ist, den Antrieb des Fahrzeugs (1) sowie die Lenkung des Fahrzeugs (1) zu steuern;
eine Kommunikationseinrichtung, die in der Lage ist, mit einer Einsatzzentrale (3) und/oder anderen, ggf. besatzungslosen Fahrzeugen (1) zu kommunizieren; und
eine Sensoreinrichtung, die in der Lage ist, über unterschiedliche Sensoren Signale aufzunehmen.

2. Besatzungsloses Fahrzeug nach Anspruch 1, **gekennzeichnet durch** eine Bewaffnung, die über ein von der Kommunikationseinrichtung oder der Sensoreinrichtung aufgenommenes Signal oder eine Entscheidung des Steuercomputers aktiviert werden kann.

3. Besatzungsloses Fahrzeug nach Anspruch 1 oder 2, **gekennzeichnet durch** eine Fahrwegbestimmungseinrichtung, mittels der der Fahrweg bestimmt wird.

4. Besatzungsloses Fahrzeug nach Anspruch 3, **dadurch gekennzeichnet, dass** der Fahrweg von der Fahrwegbestimmungseinrichtung mittels eines vorprogrammierten Kurses bestimmt wird.

5. Besatzungsloses Fahrzeug nach Anspruch 3 oder 4, **dadurch gekennzeichnet, dass** der Fahrweg von der Fahrwegbestimmungseinrichtung autonom unter Zuhilfenahme von Signalen der Sensoreinrichtung bestimmt wird.

6. Besatzungsloses Fahrzeug nach einem der Ansprüche 3 bis 5, **dadurch gekennzeichnet, dass** die Fahrwegbestimmungseinrichtung den Fahrweg auf der Grundlage einer Kombination verschiedener Bestimmungsarten bestimmt.

7. Besatzungsloses Fahrzeug nach einem der Ansprüche 3 bis 5, **dadurch gekennzeichnet, dass** die Fahrwegbestimmungseinrichtung über die Kommunikationseinrichtung empfangene Signale einer Einsatzzentrale oder anderer, ggf. besatzungsloser Fahrzeuge (1) zur Bestimmung des Fahrwegs heranzieht.

8. Besatzungsloses Fahrzeug nach einem der Ansprüche 1 bis 7, **dadurch gekennzeichnet, dass** die Kommunikationseinrichtung mit einer Einrichtung zur Erhöhung der Störresistenz und Ausfallsicherheit ausgestattet ist.

9. Besatzungsloses Fahrzeug nach Anspruch 8, **dadurch gekennzeichnet, dass** die Einrichtung zur Übertragung von Signalen zumindest zwei getrennte Strecken vorsieht, die unabhängig zum Empfang und zum Senden verwendet werden können.

10. Besatzungsloses Fahrzeug nach einem der Ansprüche 1 bis 9, **dadurch gekennzeichnet, dass** das Fahrzeug (1) mit einer Selbstverteidigungseinrichtung ausgerüstet ist.

11. Besatzungsloses Fahrzeug nach einem der Ansprüche 1 bis 10, **dadurch gekennzeichnet, dass** die Selbstverteidigungseinrichtung durch von der Sensoreinrichtung empfangenen Signale aktiviert wird.

12. Besatzungsloses Fahrzeug nach Anspruch 10 oder 11, **dadurch gekennzeichnet, dass** die Selbstverteidigungseinrichtung ein Leitungssystem aufweist, deren Leitungen unter Strom setzbar sind.

13. Besatzungsloses Fahrzeug nach einem der Ansprüche 1 bis 12, **dadurch gekennzeichnet, dass** das Fahrzeug mit unterschiedlichen Nutzlasten zur Anpassung an unterschiedliche Aufgaben ausgerüstet werden kann.

14. Besatzungsloses Fahrzeug nach Anspruch 13, **dadurch gekennzeichnet, dass** als Nutzlast ein insbesondere ausfahrbarer Turmaufbau vorgesehen ist.

15. Besatzungsloses Fahrzeug nach Anspruch 14, **dadurch gekennzeichnet, dass** auf dem Turmaufbau eine Aufklärungseinheit mit unterschiedlichen Sensoren vorgesehen ist.

16. Besatzungsloses Fahrzeug nach Anspruch 14 oder 15,
**dadurch gekennzeichnet, dass**
durch unterschiedliche Turmaufbauten eine elektronische Kampfführung über Sensoren, Störsender und andere Einrichtungen möglich ist.

17. Verband von besatzungslosen Fahrzeugen nach einem der Ansprüche 1 bis 16, **dadurch gekennzeichnet, dass** die Fahrzeuge (1) über die Kommunikationseinrichtung miteinander kommunizieren und ihre Einrichtung unter anderem auf der Basis von Signalen steuern oder regeln, die von anderen Fahrzeugen (1) des Verbands übermittelt werden.

18. Verband nach Anspruch 17, **dadurch gekennzeichnet, dass** auch der Fahrweg eines Fahrzeugs (1) unter anderem auf der Basis von Signalen bestimmt wird, die von anderen Fahrzeugen (1) übermittelt werden.

19. Verband nach einem der Ansprüche 17 oder 18, **dadurch gekennzeichnet, dass** die Fahrzeuge des Verbandes koordiniert gesteuert werden.
